# FASCICULE DE BREVET EUROPEEN

(11) **EP 3 118 169 B1**
(45) Date de publication et mention de la délivrance du brevet: **08.05.2019**
(21) Numéro de dépôt: 16382333.9
(22) Date de dépôt: 13.07.2016
(51) Int. Cl.: C03B 9/453

(54) **EXTRACTEUR D'EMBALLAGES, POUR LES INSTALLATIONS DE MANUTENTION DE VERRE À CHAUD**
EXTRAKTOR VON VERPACKUNGEN FÜR FÖRDERANLAGEN VON HEISSGLAS
PACKAGING EXTRACTOR FOR HOT GLASS HANDLING FACILITIES

(30) Priorité: 17.07.2015 ES 201531050
(43) Date de publication de la demande: 18.01.2017
(73) Titulaire: Avacon, S.A., 01400 Llodio (Alava) (ES)
(72) Inventeur: ABIEGA PERAITA, Ricardo, 01400 LLODIO (Alava) (ES); ORTEGA EGUILUZ, Roberto, 01400 LLODIO (Alava) (ES); FERNANDEZ OLMO, Germán, 01400 LLODIO (Alava) (ES); VILLAR GARCIA, Inocencio, 01400 LLODIO (Alava) (ES)
(74) Mandataire: Urizar Barandiaran, Miguel Angel

(56) Documents cités:
- EP-A1- 1 886 977
- EP-A2- 1 873 091
- DE-C1- 19 800 080
- GB-A- 2 231 855

## Description

### Objet de l'invention

L'objet de l'invention concerne, en général, un extracteur d'emballages, pour des installations de manutention de verre à chaud et s'inscrit dans la technologie pour la fabrication d'emballages en verre.

L'objet de l'invention concerne, plus particulièrement, un extracteur d'emballages utilisé sur des machines de mise en forme d'emballages en verre constituées de plusieurs sections de fabrication individuelles dans lesquelles la distribution de verre fondu, le procédé de mise en forme et le retrait de l'emballage en verre formé se font automatiquement ; et où chaque section fonctionne individuellement et de manière synchronisée avec le reste.

Sur ce type de machines, où les extracteurs font partie du processus de manutention d'emballages en verre à chaud et sont chargés de transporter le produit de la zone de moulage jusqu'à la ligne de transport où les phases de finition suivent, aussi bien l'emballage en verre que les propres machines et autres parties de l'installation sont soumis à des conditions extrêmes de fonctionnement dans un environnement particulièrement agressif en raison des températures très élevées, des vapeurs environnementales et des particules en suspension. Ainsi, il est requis que les extracteurs (tous les composants, éléments et leurs parties) offrent de la robustesse et de la fiabilité.

### Antécédents de l'invention

Dans l'état actuel de la technique, les extracteurs d'emballages sont déjà connus, utilisés abondamment sur des machines et des installations qui manipulent des emballages en verre à chaud, dont on peut citer, par exemple et entre autres, les documents de brevet WO2005085145, WO2011157315, GB2435025 et EP 1 873 091.

Les extracteurs connus offrent une structuration et une maintenance complexes. Actuellement, les extracteurs connus sont des équipements coûteux, avec un mécanisme complexe et un niveau de maintenance élevé rendant du personnel spécialisé nécessaire.

Aujourd'hui, tous les extracteurs existants déplacent le produit de 90° pour le transporter jusqu'à la bande transporteuse, bien que l'actionnement soit différent selon le modèle d'extracteur. Sur le marché actuel, différentes technologies existent pour réaliser cet actionnement, qui se réduisent à deux options d'un point de vue mécanique : Contrôle par un moteur et un cylindre ou contrôle par deux moteurs ou plus.

Le principal inconvénient des actionnements basés sur le contrôle par un moteur est une baisse de la précision et de la fiabilité, ainsi qu'une maintenance périodique et exhaustive du cylindre.

Les actionnements basés sur le contrôle par deux moteurs ou plus, utilisent un système de transmission interne de courroies ou d'engrenages et de chaînes, ainsi que des capteurs électroniques exigeant également un niveau de maintenance élevé.

Les inconvénients et les risques de la situation actuelle, pour les travaux de maintenance impliquent qu'un ouvrier doit accéder à la machine, s'exposant à un environnement agressif. De plus, il est obligatoire de disposer d'un ample entrepôt de pièces de rechange destinées à la maintenance de ces équipements.

Des performances faibles (l'on n'atteint ni la vitesse ni l'élimination des pertes engendrées par la rudesse des mécanismes) et une maintenance importante (avec un emploi abondant de lubrifiants et des remplacements fréquents des éléments des transmissions), qui devient particulièrement nécessaire et fréquente en raison de l'environnement agressif dans lequel ces machines se trouvent sont, en conséquence de ce qui précède, les problèmes non résolus sur les extracteurs connus.

### Description de l'invention

L'objet de l'invention résout tous ces problèmes, offrant une haute fiabilité basée sur la simplicité des tâches et la diminution des besoins de maintenance ainsi que l'augmentation de la vitesse de production, réduisant au minimum le nombre de composants utilisés (qui, d'autre part, sont particulièrement robustes et fiables, appropriés pour travailler dans des environnements agressifs).

L'extracteur objet de l'invention :
- élimine l'utilisation de capteurs dont la finalité est de référencer l'extracteur (il a été vérifié que les capteurs ont un taux de défaillance élevé fondamentalement pour deux raisons : les températures élevées auxquelles ils sont exposés et les vibrations qu'ils supportent). Les extracteurs connus disposent, en interne, de capteurs inductifs pour référencer la position d'origine de la pelle de manutention de l'extracteur, point de collecte des emballages. Ces capteurs sont défaillants assez fréquemment en raison des températures élevées et des vibrations auxquelles ils sont soumis. Sur l'extracteur objet de l'invention, aucun type de capteur n'est requis, donc, au lieu de référencer avec des capteurs, l'on programme grâce à un logiciel, un procédé de référencement au moyen d'une butée mécanique, de manière que, lorsque l'on a besoin de référencer l'extracteur objet de l'invention, le logiciel de contrôle des moteurs indépendants fera lentement tourner ceux-ci, déplaçant le mécanisme de la pelle de manutention jusqu'à un extrême qui sera sa limite. Le système de contrôle détecte que les moteurs indépendants ne peuvent plus tourner et ce point sera pris comme référence d'origine de la pelle de manutention.
- élimine l'utilisation de courroies ou de chaînes : Dans le cas des extracteurs basés sur deux moteurs ou plus, le système de transmission du mouvement des moteurs au bras extracteur, est réalisé au moyen de courroies ou de chaînes. Ces systèmes de transmission subissent des déformations et des jeux avec leur utilisation, ce qui provoque des défaillances au niveau de la précision sur l'équipement, provoquant des pertes de production. Pour éviter ces déformations, une maintenance périodique et très fréquente est nécessaire. Sur l'extracteur objet de l'invention, le mécanisme de la pelle de manutention qui se trouve sur le capot de protection, ne dispose pas de systèmes de transmission basés sur des chaînes ou des courroies : des systèmes à bielle sont utilisés pour la transmission du mouvement dans cette partie du mécanisme ;
- réduit en grande partie l'utilisation des composants non commerciaux (actuellement, le mécanisme de transmission des extracteurs est fabriqué avec de multiples éléments et petites pièces de transmission non commerciales, dont la fabrication est nettement plus coûteuse et augmente les durées de fabrication du produit final). L'extracteur objet de l'invention se base sur l'utilisation d'un réducteur commercial à arbres parallèles, conçu pour des applications de haute dynamique. Ce réducteur est très précis et mécaniquement fiable, n'ayant pas de problèmes de jeux ou de rupture dans la transmission. Avec cette solution, l'on obtient, en même temps, la réduction nécessaire pour le moteur et l'union des deux moteurs dans un système de transmission avec deux arbres concentriques ;
- réduit énormément les travaux de maintenance, particulièrement, le graissage périodique des courroies/chaînes de transmission, étant actuellement très fréquent et dont le coût est élevé en raison de l'environnement de travail agressif des extracteurs (températures avoisinant les 500 °C, vapeurs, huiles, graphite en suspension) et de la grande disponibilité à laquelle elles sont soumises (24h/24, 365 jours par an). Les extracteurs conventionnels requièrent un graissage ponctuel et constant, et la graisse nécessaire pour réaliser cette tâche est très coûteuse sur le marché, en plus de supposer un impact important sur l'environnement. Les systèmes de transmission de l'extracteur objet de l'invention sont constitués d'ensembles commerciaux auto-lubrifiés et étanches comme des roulements étanches à température élevée et un réducteur commercial étanche dont la mécanique se retrouve submergée d'huile sans qu'un remplacement soit nécessaire ; et
- assure un fonctionnement adéquat à la vitesse du transporteur (supérieure à 70m/min). Sur les extracteurs connus dont la transmission du mouvement se fait au moyen de courroies ou de chaînes, ces dernières ont une vitesse limitée et acquièrent des jeux avec le temps affectant la précision et faisant perdre de la production, en ne prenant pas les emballages avec précision. Il est fondamental de travailler à des vitesses élevées sans quoi la précision serait affectée. Il s'agit d'une caractéristique du processus de production : lorsque de petits emballages sont fabriqués (par exemple pour une parfumerie), les vitesses de production sont beaucoup plus grandes que lorsque de grands emballages sont fabriqués (par exemple, les bouteilles de vin) ; et plus l'emballage est petit, plus la vitesse de production est élevée. Lorsque de petits emballages sont fabriqués, l'extracteur doit être beaucoup plus précis dans le positionnement que pour de grands emballages, les premiers étant plus instables et plus susceptibles d'être marqués ou jetés. Pour cela, les extracteurs doivent être, à la fois, très rapides et très précis, ces caractéristiques ne sont pas totalement garanties avec des mécaniques dont les transmissions se font par courroies ou chaînes. L'extracteur objet de l'invention utilise des servomoteurs au lieu de moteurs asynchrones ou pas à pas. Ce type d'actionnements est conçu pour fonctionner à des vitesses élevées. De même, la transmission du mouvement est réalisée au moyen d'un servo-réducteur à faible jeu, qui est spécialement conçu pour travailler à des vitesses élevées avec beaucoup de précision dans le positionnement. Ce type de réducteur garantit qu'il n'y a pas de perte de précision dans la transmission du mouvement des servomoteurs jusqu'à la pelle de manutention ;
- requiert une faible intervention des ouvriers sur la machine ce qui permet, de plus de devenir un équipement plus fiable, puisque les éléments faibles ont été éliminés, de réduire au minimum l'interaction de l'ouvrier sur la machine pour des réparations et/ou de la maintenance. Du point de vue de la Prévention des Risques Professionnels, l'extracteur objet de l'invention implique également un progrès technologique important et une amélioration significative des conditions actuelles.

L'extracteur objet de l'invention comprend une pelle de manutention des emballages qui comporte deux degrés de liberté fournis par deux moteurs indépendants commandés au moyen d'un logiciel approprié pour référencer aussi bien les positions d'origine que les positions initiales de collecte et finales de remise des emballages en verre à chaud. En fonction du type et/ou de la taille de ces emballages, il est caractérisé par le fait que cette pelle de manutention est montée sur un bras principal utilisant, au minimum, une première transmission associée au premier moteur et qui la fait tourner dans les deux sens selon un angle déterminé (α) ; ainsi qu'une deuxième transmission associée au deuxième moteur et qui la fait tourner dans les deux sens selon un angle déterminé (β). L'angle disponible des deux transmissions est contrôlé au moyen d'un logiciel approprié.

Il est également caractérisé par le fait que la première transmission comprend un premier arbre qui, associé à l'arbre de sortie du premier moteur avec l'interposition d'une réductrice et monté sur une mortaise du bras principal, commande la rotation d'un bras primaire dans l'amplitude délimitée par l'angle (α).

Il est également caractérisé par le fait que cette deuxième transmission comprend un deuxième arbre qui, associé à l'arbre de sortie du deuxième moteur avec l'interposition d'une réductrice et monté sur une mortaise du bras principal prévu à cet effet, commande la rotation d'un bras secondaire dans l'amplitude délimitée par l'angle (β).

Il est également caractérisé par le fait que le bras primaire et le bras secondaire sont liés entre eux au moyen d'un ou plusieurs bras intermédiaires ; de manière que les deux mouvements commandés par les deux moteurs soient toujours synchronisés.

Il est également caractérisé par le fait que les extrémités (31a), (31b) des bras intermédiaires (3) sont montées sur leurs trous borgnes (12a) respectifs du bras primaire (12) et (22a) du bras secondaire (22) avec l'interposition de douilles (5); et par le fait que lesdites douilles (5) sont des roulements rigides à billes.

À partir de cette conception de base, sont inclues dans l'objet de l'invention n'importe quelles réalisations qui n'altèrent pas, ne changent pas, ou ne modifient pas l'essence de la proposition. En particulier :
- ledit angle (α) est compris entre 0° et 230° ; et ledit angle (β) est compris entre 0° et 277° ;
- la réductrice est montée sur un support pourvu d'un orifice dans lequel est disposé un essieu creux en guise d'étui pour ledit premier arbre ;
- l'amplitude maximale de l'angle (α) est délimitée par un blocage du propre mécanisme de bras intermédiaires ;
- l'amplitude maximale de l'angle (β) est délimitée par des taquets limitant le parcours, l'un disposé dans le support et l'autre dans le bras principal.

D'autres configurations et avantages de l'invention peuvent être déduits à partir de la description suivante, et des revendications dépendantes.

### Description des dessins

Afin de mieux comprendre l'objet de l'invention, une forme préférentielle de réalisation est représentée sur les figures jointes, pouvant présenter des changements accessoires ne dénaturant pas son fondement. Dans ce cas :

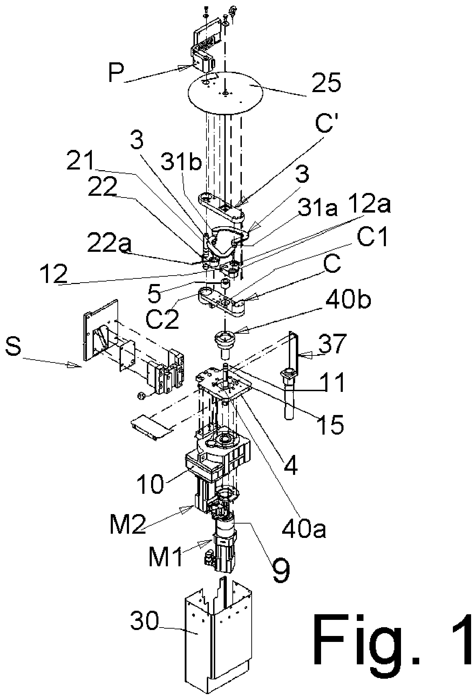

La figure 1 représente une vue générale schématique en perspective de l'extracteur objet de l'invention, avec ses composants de base en disposition de montage.

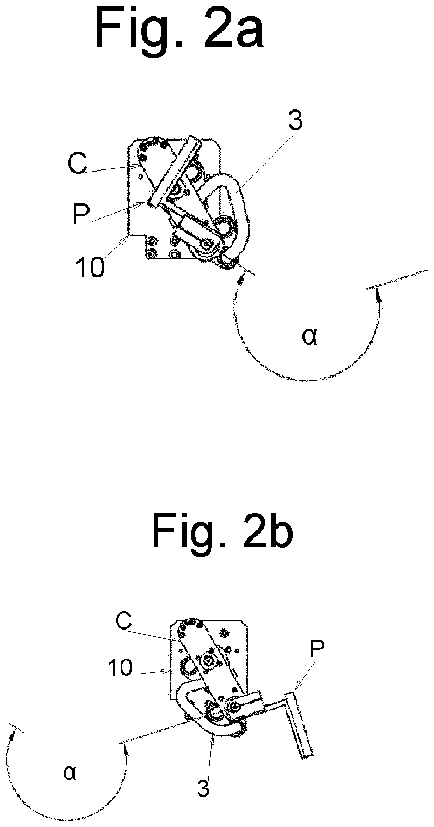

Les figures 2^{a} et 2b représentent chacune des vues schématiques, en plan, de l'extracteur objet de l'invention, pour observer l'amplitude que peut atteindre l'angle de rotation (α).

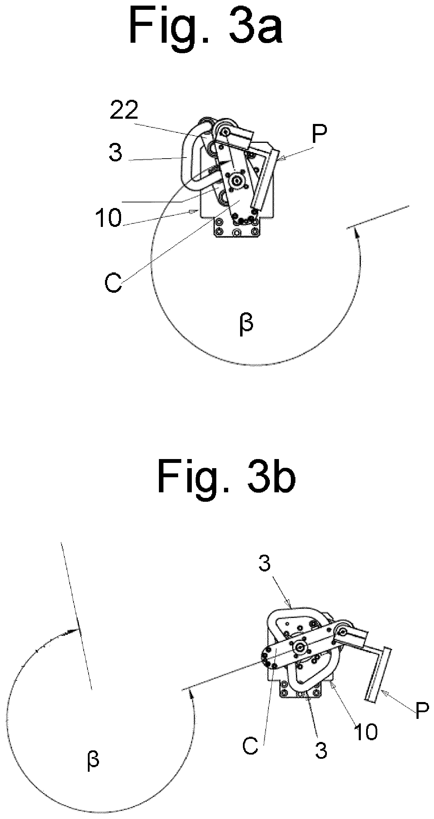

Les figures 3a et 3b représentent chacune des vues schématiques semblables, en plan, respectivement, aux figures 2a et 2b, pour observer l'amplitude que peut atteindre l'angle de rotation (β).

### Description d'une réalisation préférentielle

Un exemple de réalisation pratique, non limitative, de la présente invention est décrit ci-après. D'autres modes de réalisation dans lesquels sont introduits des changements accessoires ne dénaturant pas son fondement ne sont exclus en aucune manière.

L'objet de l'invention est un extracteur d'emballages, pour des installations de manutention de verre à chaud. Il comprend une pelle (P) de manutention des emballages qui comporte deux degrés de liberté fournis par deux moteurs indépendants (M1), (M2) commandés au moyen d'un logiciel approprié pour référencer aussi bien les positions d'origine que les positions initiales de collecte et finales de remise des emballages en verre à chaud en fonction du type et/ou de la taille de ces emballages

Conformément à l'invention, et selon la réalisation représentée, cette pelle de manutention (P) est montée sur un bras principal (C) utilisant, au minimum :
- une première transmission associée au moteur (M1) et qui la fait tourner dans les deux sens selon un angle déterminé (α) ; contrôlant l'angle disponible au moyen d'un logiciel approprié ; et
- une deuxième transmission associée au moteur (M2) et qui la fait tourner dans les deux sens selon un angle déterminé (β) ; contrôlant l'angle disponible au moyen d'un logiciel approprié.

D'un point de vue opérationnel, il dispose d'une premier arbre (11) associé à l'arbre de sortie du premier moteur (M1) avec l'interposition d'une réductrice (9) et monté sur une mortaise (C1) du bras principal (C) de manière que ce moteur (M1) commande la rotation d'un bras primaire (12) dans l'amplitude délimitée par l'angle (α).

D'un point de vue opérationnel, il dispose d'un deuxième arbre (21) associé à l'arbre de sortie du deuxième moteur (M2) avec l'interposition d'une réductrice (10) et monté sur une mortaise (C2) du bras principal (C) de manière que ce moteur (M2) commande la rotation d'un bras secondaire (22) dans l'amplitude délimitée par l'angle (β).

La réductrice (10) est montée sur un support (4) pourvu d'un orifice (40a) dans lequel elle dispose d'un essieu creux (40b) en guise d'étui pour ledit premier arbre (11).

Le bras primaire (12) et le bras secondaire (22) sont reliés entre eux au moyen d'un ou plusieurs bras intermédiaires (3) de manière que les mouvements commandés par les moteurs (M1), (M2) sont toujours synchronisés.

Les extrémités (31a), (31b) de ces bras intermédiaires (3) sont montées sur leurs trous borgnes (12a) respectifs du bras primaire (12) et (22a) du bras secondaire (22) avec l'interposition de douilles (5). En particulier, lesdites douilles (5) sont des roulements rigides à billes.

L'amplitude maximale de l'angle (α) est délimitée par un blocage ou une collision mécanique au sein du propre mécanisme : les bras intermédiaires (3) entrent en collision avec les axes (11) et (21).

L'amplitude maximale de l'angle (β) est limitée par un taquet (15), disposé sur le support (4) et limiteur de parcours en entrant en collision avec le propre corps principal (C).

En particulier, ledit angle (α) est compris entre 0° et 230°, et ledit angle (β) est compris entre 0° et 277°.

Des éléments accessoires/complémentaires font partie de l'extracteur objet de l'invention, mais ne sont pas essentiels/inhérents à celui-ci, et peuvent varier sans altérer son essence. Les éléments suivants sont accessoires/complémentaires dans l'exemple de réalisation représenté :
- un disque (25) qui cache et protège au niveau supérieur les mécanismes de l'extracteur, et au-dessus duquel est disposé la pelle (P). Pour monter ce disque (25) il est nécessaire de disposer préalablement un support de disque (C') sur la tête de lecture (C) ;
- une carcasse (30), qui cache et protège au niveau inférieur les moteurs (M1), (M2). Cette carcasse (30) est montée sur le support (4) de la réductrice (10), ou sur le propre support (S) qui fait partie de la machine ou de l'installation où est monté l'extracteur ;
- un support et un câble (37) pour une connexion rapide et interactive avec le système de contrôle au moyen d'un logiciel approprié.

Le support (S) (une partie de la machine ou de l'installation) où est monté l'extracteur, ainsi que la position de la bande transporteuse sur laquelle les emballages manipulés se déplacent est également indifférent et accessoire aux effets de l'invention.

Les matériaux, les dimensions, les tailles et, en général, les autres détails accessoires ou secondaires qui n'altèrent pas, ne changent pas ou ne modifient pas l'exposé pourront être variables.

Les termes dans lesquels ce mémoire est rédigé sont certains et reflètent fidèlement l'objet décrit, qui doit être considéré dans son sens le plus élargi et jamais de façon limitative.

## Revendications

1. Extracteur d'emballages, pour des installations de manutention de verre à chaud; **caractérisé par le fait qu'**il dispose d'une pelle (P) de manutention des emballages qui comporte deux degrés de liberté fournis par deux moteurs indépendants (M1), (M2) commandé au moyen d'un logiciel approprié pour référencer aussi bien les positions d'origine que les positions initiales de collecte et finale de remise des emballages en verre à chaud en fonction du type et/ou de la taille de ces emballages; et **par le fait que** cette pelle (P) est montée sur un bras principal (C) utilisant, au minimum:
a) une première transmission associée au moteur (M1) et qui la fait tourner dans les deux sens selon une amplitude déterminée par un angle (α) ; contrôlant cet angle disponible de rotation au moyen d'un logiciel approprié;
b) une seconde transmission associée au moteur (M2) et qui la fait tourner dans les deux sens selon une amplitude déterminée par un angle (β); contrôlant cet angle disponible au moyen d'un logiciel approprié;
c) **par le fait que** la première transmission comprend un premier arbre (11) qui, associé à l'arbre de sortie du premier moteur (M1) avec l'interposition d'une réductrice (9) est montée sur une mortaise (C1) du bras principal (C), commande la rotation d'un bras primaire (12) dans l'amplitude délimitée par l'angle (α);
d) **par le fait que** la deuxième transmission comprend un deuxième arbre (21) qui, associé à l'arbre de sortie du deuxième moteur (M2) avec l'interposition d'une réductrice (10) est montée sur une mortaise (C1) du bras principal (C), commande la rotation d'un bras secondaire (22) dans l'amplitude délimitée par l'angle (β);
e) **par le fait que** le bras primaire (12) et le bras secondaire (22) sont reliés entre eux au moyen d'un ou plusieurs bras intermédiaires (3) ; de manière que les mouvements commandés par les moteurs (M1), (M2) soient toujours synchronisés;
f) **par le fait que** les extrémités (31a), (31b) des bras intermédiaires (3) sont montées sur leurs trous borgnes (12a) respectifs du bras primaire (12) et (22a) du bras secondaire (22) avec l'interposition de douilles (5);
g) **par le fait que** lesdites douilles (5) sont des roulements rigides à billes.

2. Extracteur, selon la revendication 1, **caractérisé par le fait que** l'amplitude de cet angle (α) est comprise entre 0° et 230°.

3. Extracteur, selon la revendication 1, **caractérisé par le fait que** l'amplitude de cet angle (β) est comprise entre 0° et 277°.

4. Extracteur, selon la revendication 1, **caractérisé par le fait que** la réductrice (10) est montée sur un support (4) pourvu d'un orifice (40a) dans lequel est disposé un essieu creux (40b) en guide d'étui pour ledit premier axe (11).

5. Extracteur, selon la revendication 1, **caractérisé par le fait que** l'amplitude maximale de l'angle (α) est délimitée par un blocage ou une collision mécanique au sein du propre mécanisme : les bras intermédiaires (3) entrent en collision avec les axes (11) et (21).

6. Extracteur, selon la revendication 1, **caractérisé par le fait que** l'amplitude maximale de l'angle (β) est délimitée par un taquet (15), disposé sur le support (4), qui limite le parcours en entrant en collision avec le propre corps principal (C).

## Patentansprüche

1. Extraktor von Verpackungen für Förderanlagen von Heissglas; **gekennzeichnet dadurch, dass** er eine Schaufel (P) für den Transport der Verpackungen beinhaltet, die zwei Freiheitsgrade umfasst, die über zwei unabhängige Motoren (M1), (M2) bereitgestellt und über eine entsprechende Software gesteuert werden, um sowohl die Ausgangspositionen als auch die Anfangsposition der Aufnahme und die Endposition der Übergabe der Verpackungen von Heissglas zu referenzieren, abhängig von Typ und/oder Größe dieser Verpackungen; und dass die besagte Schaufel (P) an einem Hauptarm (C) montiert ist und mindestens Folgendes umfasst:
a) ein erstes Getriebe, das mit dem Motor (M1) verbunden ist und das es ihr erlaubt, sich in beide Richtungen in einer vorbestimmten Amplitude um einen Winkel (α) zu bewegen; dieser Drehwinkel wird dabei mittels entsprechender Software gesteuert;
b) ein zweites Getriebe, das mit dem Motor (M2) verbunden ist und das es ihr erlaubt, sich in beide Richtungen in einer vorbestimmten Amplitude um einen Winkel (β) zu bewegen; dieser Drehwinkel wird dabei mittels entsprechender Software gesteuert;
c) das erste Getriebe umfasst eine erste Achse (11), die, verbunden mit der Ausgangsachse des ersten Motors (M1) mit Zwischensetzung eines Reduziergetriebes (9) und montiert an einem Einschnitt (C1) des Hauptarms (C), die Drehung eines primären Arms (12) innerhalb der Amplitude antreibt, die durch den Winkel (α) begrenzt wird;
d) das zweite Getriebe umfasst eine zweite Achse (21), die, verbunden mit der Ausgangsachse des zweiten Motors (M2) mit Zwischensetzung eines Reduziergetriebes (10) und montiert an einem Einschnitt (C2) des Hauptarms (C), die Drehung eines sekundären Arms (22) innerhalb der Amplitude antreibt, die durch den Winkel (β) begrenzt wird;
e) der erste Arm (12) und der zweite Arm (22) sind über einen oder mehrere Zwischenarme (3) miteinander verbunden; so, dass die von den Motoren (M1), (M2) vorgegebenen Bewegungen immer synchron ablaufen;
f) die Enden (31a), (31b) der Zwischenarme (3) sind in entsprechenden Einschnitten (12a) des ersten Arms (12) und (22a) des zweiten Arms (22) mit der Zwischenschaltung von Lagerbuchsen (5) montiert;
g) die besagten Lagerbuchsen (5) sind starre Kugellager.

2. Extraktor nach Anspruch 1, **gekennzeichnet dadurch, dass** die Amplitude des besagten Winkels (α) zwischen 0° und 230° liegt.

3. Extraktor nach Anspruch 1, **gekennzeichnet dadurch, dass** die Amplitude des besagten Winkels (β) zwischen 0° und 277° liegt.

4. Extraktor nach Anspruch 1, **gekennzeichnet dadurch, dass** das Reduziergetriebe (10) an einer Halterung (4) befestigt ist, die mit einer Bohrung (40a) versehen ist, in der eine Hohlachse (40b) als Hülle für die besagte erste Achse (11) angeordnet ist.

5. Extraktor nach Anspruch 1, **gekennzeichnet dadurch, dass** die maximale Amplitude des Winkels (α) durch eine Sperrvorrichtung begrenzt wird oder es zu einer mechanischen Kollision des Mechanismus selbst kommt: die Zwischenarme (3) stoßen an die Achsen (11) und (21).

6. Extraktor nach Anspruch 1, **gekennzeichnet dadurch, dass** die maximale Amplitude des Winkels (β) durch einen Anschlag (15) begrenzt wird, der an der Halterung (4) angebracht ist und die Wegstrecke begrenzt, indem er gegen den Hauptkörper (C) stößt.

## Claims

1. Packaging extractor for hot glass handling facilities; **characterized in that** it consists of a blade (P) for handling packaging that involves two degrees of freedom provided by two independent motors (M1), (M2) controlled by appropriate software to reference both the positions of origin and initial positions of collection and end of delivery of the hot glass packaging depending on the type and/or size of said packages; and because said blade (P) is mounted on a main arm (C) using, at least:
a) An initial transmission associated with the motor (M1) and which makes it rotate in both directions a specific range determined by an angle (α); controlling this available rotating angle with appropriate software;
b) a second transmission associated with the motor (M2) and which makes it rotate in both directions a specific range determined by an angle (β); controlling this available angle with appropriate software;
c) because the first transmission consists of an initial shaft (11) that, associated with the output shaft of the first motor (M1) with interposition of a reducer (9) and mounted on a counterbore (C1) of the main arm (C), controls the rotation of a primary arm (12) within the range delimited by the angle (α);
d) because the second transmission consists of a second shaft (21) that, associated with the output shaft of the second motor (M2) with interposition of a reducer (10) and mounted on a counterbore (C2) of the main arm (C), controls the rotation of a secondary arm (22) within the range delimited by the angle (β);
e) because the primary arm (12) and the secondary arm (22) interrelate with one or several intermediate arms (3); so that movements controlled by the motors (M1), (M2) are always synchronized;
f) because the ends (31a), (31b) of the intermediate arms (3) are mounted on respective recesses (12a) of the primary arm (12) and 22a) of the secondary arm (22) with interposition of bushings (5);
g) because the mentioned bushings (5) are rigid ball bearings.

2. Extractor, according to claim 1, **characterized in that** the range of the mentioned angle (α) is between 0° and 230°.

3. Extractor, according to claim 1, **characterized in that** the range of the mentioned angle (β) is between 0° and 277°.

4. Extractor, according to claim 1, **characterized in that** the reducer (10) is mounted on a bracket (4) provided with an orifice (40a) in which a hollow shaft (40b) is arranged as a sheath for the mentioned first shaft (11).

5. Extractor, according to claim 1, **characterized in that** the maximum range of the angle (α) is delimited by blocking or mechanical collision of the mechanism itself: the intermediate arms (3) collide with shafts (11) and (21).

6. Extractor, according to claim 1, **characterized in that** the maximum range of the angle (β) is delimited by a stop (15), arranged on the bracket (4), that limits the travel on colliding against the main body (C).
